# EUROPEAN PATENT APPLICATION

(11) **EP 3 840 487 A1**
(43) Date of publication of application: **23.06.2021**
(21) Application number: 18930317.5
(22) Date of filing: 17.08.2018
(51) Int. Cl.: H04W 56/00, H04J 3/06, H04W 8/22, H04W 92/20

(54) **RADIO COMMUNICATION DEVICE AND RADIO COMMUNICATION METHOD**

(71) Applicant: NTT DoCoMo, Inc., Tokyo 100-6150 (JP)
(72) Inventor: HARADA, Hiroki, Tokyo 100-6150 (JP)
(74) Representative: Hoffmann Eitle
(86) International application number: PCT/JP2018/030539
(87) International publication number: WO 2020/035947

(57) **Abstract**

The radio communication apparatus according to one aspect of the present disclosure includes a transmitting/receiving unit that communicates with an integrated access backhaul (IAB) node, and a control unit that determines timing control of at least one of transmission or reception based on information received from the IAB node. According to one aspect of the present disclosure, transmission/reception timings of an IAB node can be appropriately controlled.

## Description

### Technical Field

The present disclosure relates to a radio communication apparatus and a radio communication method in next-generation mobile communication systems.

### Background Art

In the universal mobile telecommunications system (UMTS) network, the specifications of long-term evolution (LTE) have been drafted for the purpose of further increasing high speed data rates, providing lower delays, and the like (see Non-Patent Literature 1). In addition, the specifications of LTE-Advanced (LTE-A, LTE Rel. 10-14) have been drafted for the purpose of further increasing the capacity, sophistication, and the like of LTE (LTE Rel. 8, 9) .

Successor systems of LTE (for example, future radio access (FRA), 5th generation mobile communication system (5G), 5G+ (plus), New Radio (NR), new radio access (NX), future generation radio access (FX), LTE Rel. 15 or later versions, and so on) are also under study.

### Citation List

### Non Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In future radio communication systems (for example, NR), the use of integrated access backhaul (IAB) technology that uses NR communication as a backhaul between base stations (or between a base station and a relay station) is under study. In particular, it is expected that IAB using NR communication using millimeter waves can expand the coverage area at low cost.

However, a concrete study on how to perform operations related to transmission/reception timing control of an IAB node has not yet been advanced. If this is not studied, appropriate operation of the IAB node will not be performed, and there is a risk that a drop of communication throughput or the like becomes a problem.

Therefore, one of the objects of the present disclosure is to provide a radio communication apparatus and a radio communication method capable of appropriately controlling transmission/reception timings of an IAB node.

### Solution to Problem

The radio communication apparatus according to one aspect of the present disclosure includes a transmitting/receiving unit that communicates with an integrated access backhaul (IAB) node, and a control unit that determines timing control of at least one of transmission or reception based on information received from the IAB node.

### Advantageous Effects of Invention

According to one aspect of the present disclosure, transmission/reception timings of an IAB node can be appropriately controlled.

### Brief Description of Drawings

Fig. 1 is a diagram illustrating an example of a configuration of an IAB.
Fig. 2 is a diagram illustrating an example of transmission/reception timings in case 1.
Fig. 3 is a diagram illustrating an example of transmission/reception timings in case 2.
Fig. 4 is a diagram illustrating an example of transmission/reception timings in case 3.
Fig. 5 is a diagram illustrating an example of transmission/reception timings in case 4.
Fig. 6 is a diagram illustrating an example of transmission/reception timings in case 5.
Fig. 7 is a diagram illustrating an example of a mismatch in transmission/reception timings in an IAB node.
Fig. 8 is a diagram illustrating an example of transmission/reception timings of a new case.
Fig. 9 is a diagram illustrating an example of a schematic configuration of a radio communication system according to one embodiment.
Fig. 10 is a diagram illustrating an example of an overall configuration of a base station according to one embodiment.
Fig. 11 is a diagram illustrating an example of a functional configuration of the base station according to one embodiment.
Fig. 12 is a diagram illustrating an example of an overall configuration of a user terminal according to one embodiment.
Fig. 13 is a diagram illustrating an example of a functional configuration of the user terminal according to one embodiment.
Fig. 14 is a diagram illustrating an example of a hardware configuration of the base station and the user terminal according to one embodiment.

### Description of Embodiments

The use of integrated access backhaul (IAB) technology, which uses NR communication as a backhaul between base stations (or between a base station and a relay station), is under study. In particular, it is expected that IAB using NR communication using millimeter waves can expand the coverage area at low cost.

An IAB node may have at least one function such as Distribution Unit (DU), Central Unit (CU), Mobile Termination (MT), or the like. Therefore, the IAB node may function as a base station or as a user terminal (User Equipment (UE)).

Note that the IAB may be called a radio backhaul or the like. A link between IAB nodes may be referred to as a backhaul link. A link between the IAB node and the UE may be referred to as an access link. The IAB node may use communication using NR for the backhaul link. The IAB node may use communication using NR for the access link, or may use communication based on another radio access technology (RAT) .

With the introduction of the IAB, base stations can use the same frequency for backhaul and UE access simultaneously or by switching, and thus it is expected to improve frequency utilization efficiency, for example. For example, a backhaul link and an access link may be multiplexed using at least one of time division multiplexing (TDM), frequency division multiplexing (FDM), or space division multiplexing (SDM).

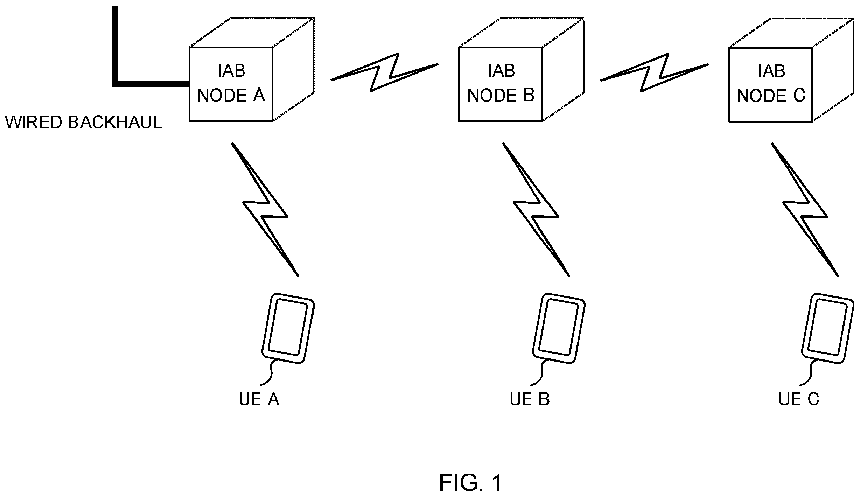

Fig. 1 is a diagram illustrating an example of a configuration of the IAB. In this example, three IAB nodes A to C are illustrated. The IAB node A is connected to a core network via a wired backhaul (for example, an optical fiber network).

An upper IAB node may be referred to as an IAB donor, a parent IAB node, a parent node, an upper node, and the like. A lower IAB node may be referred to as a child IAB node, a child node, a lower node, and the like. Here, the "upper" may mean that it is closer to at least one of a base station (for example, gNB), a wired backhaul, a core network, or the like (the number of hops is small).

For example, in the example of Fig. 1, the IAB node A is the parent of the IAB node B and the IAB node B is the parent of the IAB node C. Thus, the IAB may include a plurality of backhaul hops. In addition, the IAB nodes A to C can communicate with the UEs A to C, respectively, via access links.

On the other hand, in NR, the cell phase synchronization accuracy measured at an antenna connector of the base station is required to be within given seconds. Here, the request for the cell phase synchronization accuracy in a time division duplex (TDD) band may be defined as the maximum absolute deviation of a frame start timing between any pair of cells with overlapping coverage areas and the same frequencies. In the present disclosure, the given seconds will be described as 3 µs but are not limited to this.

That is, in NR, the transmission timing difference between base stations is required to be within 3 µs. Since the IAB node is a base station for the UE, the DL transmission timing difference between IAB nodes must be within 3 µs, at least from the viewpoint of the UE.

The IAB is being studied to support timing advance (TA) based synchronization between IAB nodes. However, there has been little progress in studies regarding how to align timings within a single IAB node or among a plurality of IAB nodes (for example, slot-level alignment, symbol-level alignment, or no alignment).

Specifically, it is preferable to study the following cases 1 to 5.
- Case 1: DL transmission timings are aligned between IAB node and donor node,
- Case 2: DL and UL transmission timings are aligned within one IAB node,
- Case 3: DL and UL reception timings are aligned within one IAB node,
- Case 4: within one IAB node, case 2 is followed for transmission and case 3 is followed for reception,
- Case 5: within one IAB node, case 1 is followed for access link timing and case 4 is followed for backhaul link timing.

Note that the alignment of a certain transmission/reception timing with another transmission/reception timing may mean that the respective start timings correspond to the same periodic timing (for example, slot boundary, arbitrary slot head, or the like).

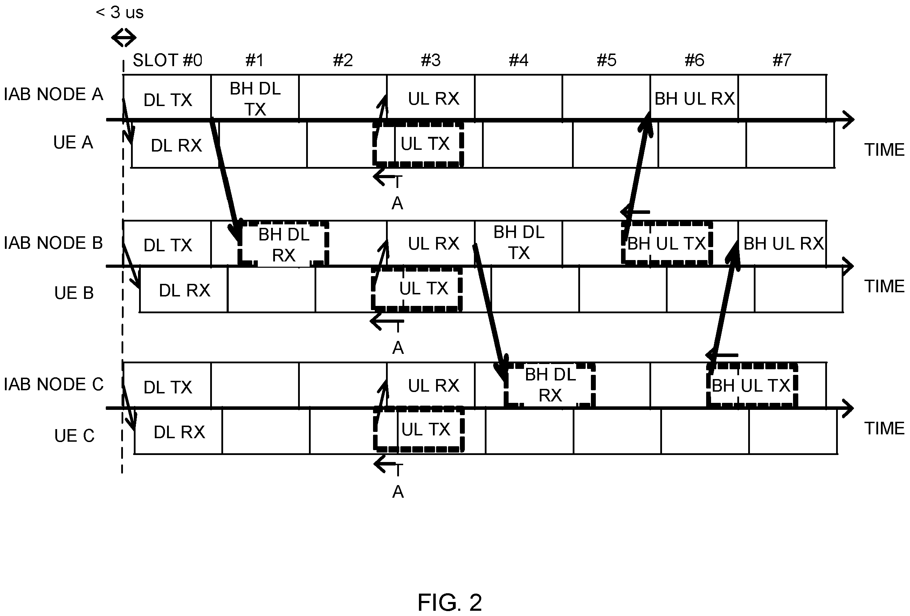

Fig. 2 is a diagram illustrating an example of transmission/reception timings in case 1. Note that the example illustrated in Figs. 2 to 6 will be described assuming the configuration of the IAB in Fig. 1. Slots #0 to #7 illustrated in these examples are represented according to transmission/reception timings in each IAB node or UE.

A DL TX and a UL RX of the IAB node indicate transmission and reception, respectively, using an access link to the UE. In addition, BH UL TX and BH DL RX of the IAB node indicate transmission and reception, respectively, using a backhaul link to the parent IAB node. In addition, BH DL TX and BH UL RX of the IAB node indicate transmission and reception, respectively, using a backhaul link to the child IAB node.

An arrow indicates who receives a transmitted signal. For example, DL TX in slot #0 of IAB node A is received by DL RX in slot #0 of the UE A. In the example illustrated in Figs. 2 to 6, the transmission period of each signal is assumed to be one slot for simplicity, but is not limited to this. Further, slots may also be replaced with any time unit (for example, one or more symbols).

A dashed line in the diagram illustrates a transmitted or received signal that does not match a slot boundary. The UL TX of the UE deviates from the slot boundary by the amount of TA. In addition, the BH UL TX also deviates from the slot boundary by the amount of TA of MT function of the IAB.

In the example of Fig. 2, the timings of transmission/reception (DL TX, UL RX) for the UE and the timings of transmission/reception (BH DL TX, BH UL RX) for the child node at a certain IAB node are aligned. Therefore, the IAB node may FDM or SDM these signals.

On the other hand, the timings of transmission/reception (BH UL TX, BH DL RX) for the parent node in a certain IAB node are not aligned with the timings of transmission/reception for the UE and transmission/reception for the child node. Therefore, the IAB node cannot multiplex the transmission/reception for the parent node with the transmission/reception for the UE or the transmission/reception for the child node.

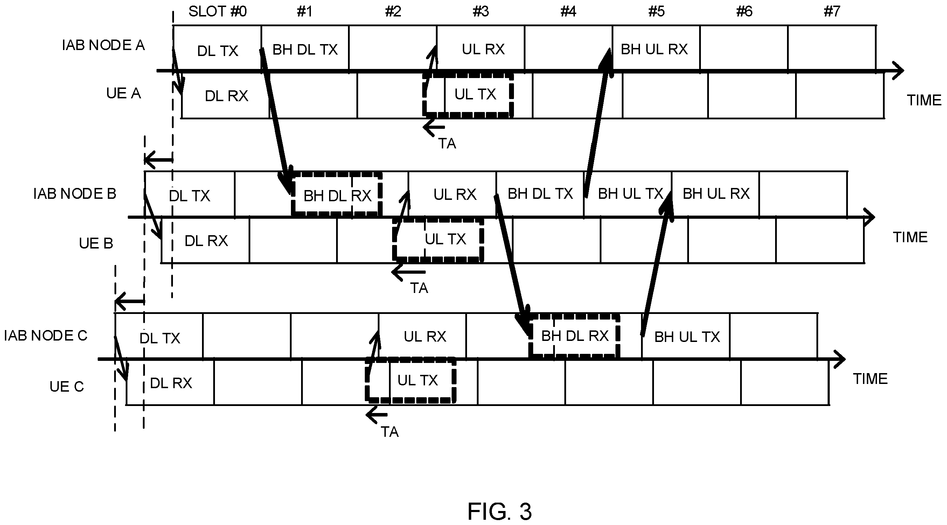

Fig. 3 is a diagram illustrating an example of transmission/reception timings in case 2. In order to align the DL and UL transmission timings within the IAB nodes, the frame start timing of the child node is controlled to be earlier than the frame start timing of the parent node.

In the example of Fig. 3, the transmission timing for the parent node in a certain IAB node aligns with the transmission/reception timing for the UE or the transmission/reception timing for the child node, and thus these signals can be FDM or SDM. On the other hand, since the frame start timing (and thus the transmission timing of DL TX (including BH DL TX) between IAB nodes) is not aligned between the IAB nodes, it is not possible to satisfy the request for the cell phase synchronization accuracy of the TDD.

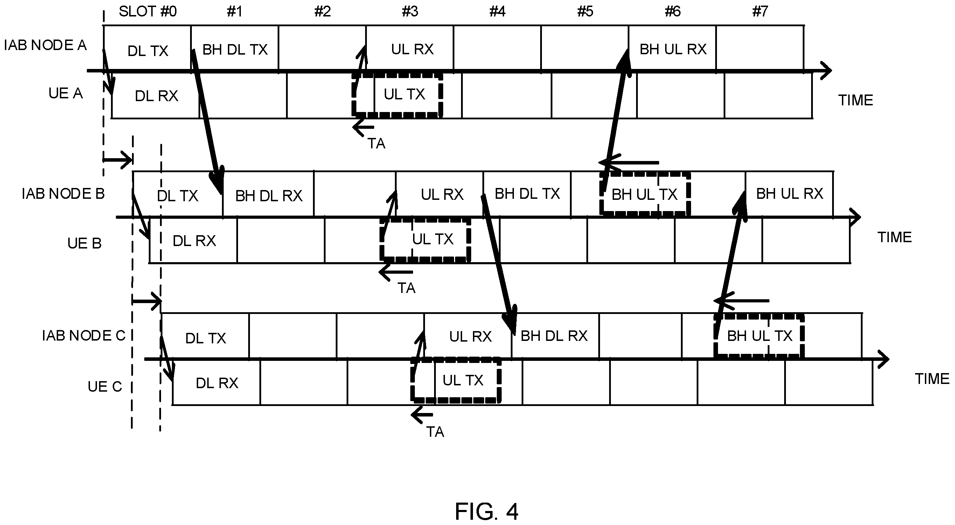

Fig. 4 is a diagram illustrating an example of transmission/reception timings in case 3. In order to align the DL and UL reception timings within the IAB node, the frame start timing of the child node is controlled to be later than the frame start timing of the parent node.

In the example of Fig. 4, since various reception timings at a certain IAB node are aligned, simultaneous reception (FDM or SDM) of the backhaul link and the access link is possible. On the other hand, since the frame start timings do not match between IAB nodes, the request for the cell phase synchronization accuracy of the TDD cannot be satisfied.

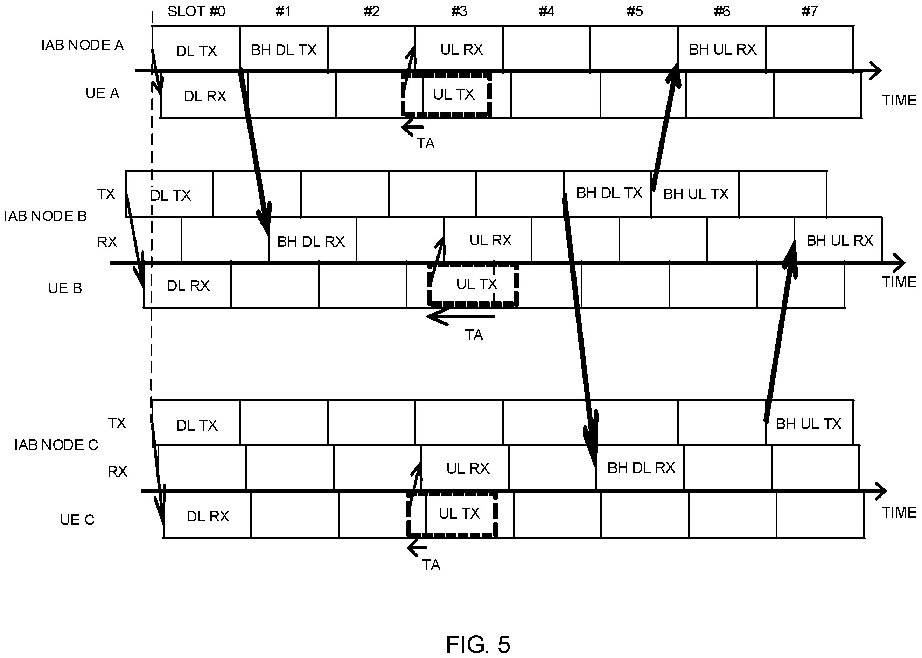

Fig. 5 is a diagram illustrating an example of transmission/reception timings in Case 4. In case 4, in order to align the transmission timings and align the reception timings within the IAB node, the transmission frame timings and the reception frame timings of the IAB may be different. The IAB nodes B and C are described separately because their transmission timings and the reception timings are misaligned. On the other hand, these timings of the IAB node A are aligned.

In the example of Fig. 4, since various transmission timings at a certain IAB node are aligned, simultaneous transmission (FDM or SDM) of the backhaul link and the access link is possible. In addition, since various reception timings at a certain IAB node are aligned, simultaneous reception (FDM or SDM) of the backhaul link and the access link is possible.

On the other hand, since the frame start timings do not match between IAB nodes, the request for the cell phase synchronization accuracy of the TDD cannot be satisfied. Further, since the transmission timings and the reception timings are different in the node, processing becomes complicated.

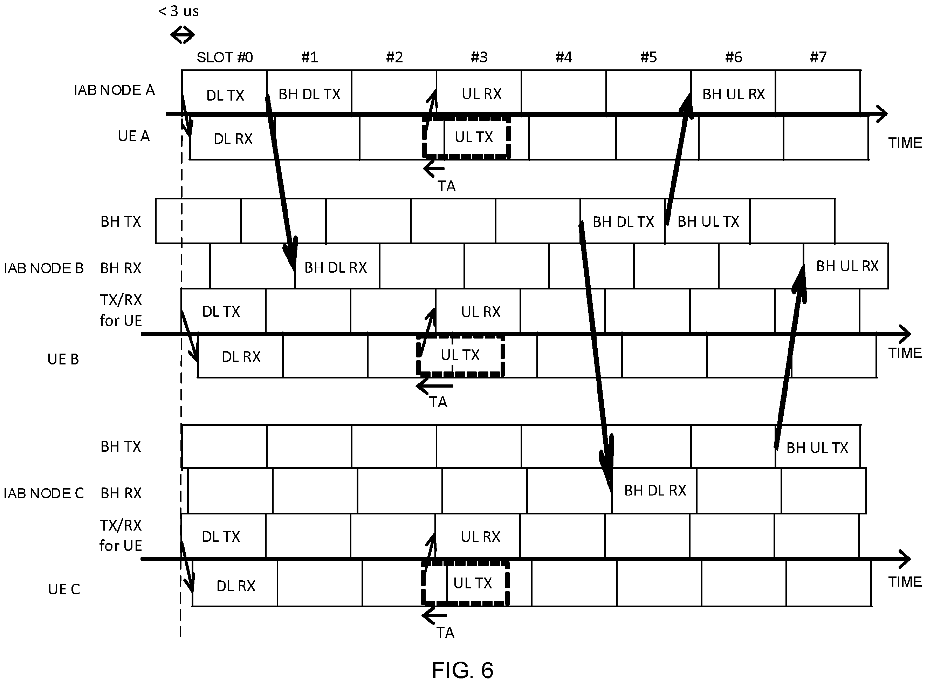

Fig. 6 is a diagram illustrating an example of transmission/reception timings in Case 5. In this example, the IAB nodes B and C are described separately because their backhaul transmission (BH TX) timings, backhaul reception (BH RX) timings, and access link transmission/reception (TX/RX for UE) timings are misaligned from each other. On the other hand, these timings of the IAB node A are aligned.

In case 5, since the DL transmission timing for the UE is aligned between the IAB nodes, it may be considered that the request for the cell phase synchronization accuracy of the TDD is satisfied.

On the other hand, since the transmission timings and the reception timings are different between the backhaul link and the access link, the IAB nodes cannot perform simultaneous transmission or simultaneous reception (FDM or SDM) and the like of the backhaul link and the access link.

As can be seen by referring to Figs. 2 to 6, in order to satisfy the request for the cell phase synchronization accuracy of the TDD band, it is necessary to align at least DL TX timings for access link (UE) between IAB nodes as in case 1 or 5. This is to avoid cross link interference between DL and UL.

In this case, the IAB node may use as the DL TX timing for the own UE a timing shifted forward by TA/2 with reference to a DL RX timing from the parent node (that is, a BH DLRX timing). Thus, timing alignment between IAB nodes in consideration of propagation delay can be supported.

On the other hand, in cases 1 and 5 and the like, since the IAB node has a plurality of transmission timings and reception timings, SDM or FDM multiplexing cannot be performed for some or all transmissions and receptions.

Note that a frame, a subframe, a slot, a symbol, a time series, a timing, and the like in the present disclosure may be replaced with each other.

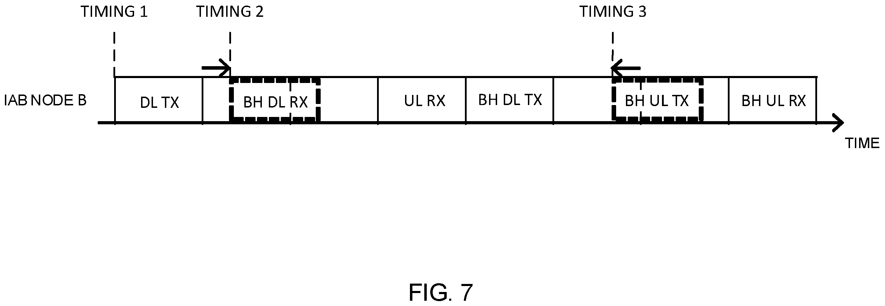

Fig. 7 is a diagram illustrating an example of a mismatch in transmission/reception timings in an IAB node. Fig. 7 corresponds to an excerpt of the transmission/reception timings of the IAB node B in Fig. 2.

In the example of Fig. 2, there are three transmission/reception timings of a timing 1 corresponding to a backhaul DL transmission timing, a backhaul UL reception timing, and an access UL/DL timing, a timing 2 corresponding to a backhaul DL reception timing, and a timing 3 corresponding to a backhaul UL transmission timing.

In this manner, depending on implementation of the IAB node, the stationing scenario, the accommodation status of the UE or child node (for example, whether a beam used as the backhaul link has a UE or child node capable of FDM/SDM), or the like, it is conceivable to apply different timing control (whether it is desired to match the transmission timing, or to match the reception timing, or the like) to each IAB node.

Further, if it is a usual UE, an operation is performed to shift the UL transmission timing forward using TA with reference to the reception timing of the DL signal from the base station, but the IAB node needs to perform a timing control operation different from those of the normal UE and the existing base station.

However, a concrete study on how to perform operations related to transmission/reception timing control of an IAB node has not yet been advanced. If this is not studied, appropriate operation of the IAB node will not be performed, and there is a risk that a drop of communication throughput or the like becomes a problem.

Therefore, the present inventor has conceived a method for appropriately controlling the transmission/reception frame timings of the IAB node.

Hereinafter, embodiments according to the present disclosure will be described in detail with reference to the drawings. The radio communication method according to each of the embodiments may be applied independently, or may be applied in combination with others.

In the present disclosure, timing control, transmission timing control, reception timing control, and transmission/reception timing control may be replaced with each other.

### (Radio Communication Method)

### <Reporting timing control information to upper node>

In one embodiment, the IAB node may transmit information regarding timing control of the own node (hereinafter, also referred to as timing control information) to the upper node when connecting to the upper node or during communication. Here, the timing control information may be a capability related to timing control or a request related to timing control.

The IAB node may transmit timing control information using higher layer signaling, physical layer signaling, or a combination thereof. In the present disclosure, the higher layer signaling may be, for example, any of radio resource control (RRC) signaling, medium access control (MAC) signaling, broadcast information, and so on, or a combination of these.

For the MAC signaling, for example, a MAC control element (MAC CE), a MAC protocol data unit (PDU), or the like may be used. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI), uplink control information (UCI), or the like.

For example, the above timing control information may include information regarding whether or not it is possible to perform (or a request for whether or not to perform) transmission timing control for the own node on a TA basis like other UEs (or other nodes) when viewed from the upper IAB node.

When the upper node receives from the lower node information indicating that transmission timing control for the lower node may be performed on a TA basis like other UEs (or other nodes) or a request to perform the transmission timing control, for example, the upper node may determine to perform own timing control based on case 1 or 5 described above, may assume that the lower node is based on case 1 or 5, or may apply control based on case 1 or 5 to the lower node.

In this case, the timing of signal reception from the lower node and the timing of signal reception from the UE are aligned, and thus the upper node can easily control the receiving process (inverse multiplexing of the received signal, or the like).

When the upper node receives from the lower node information indicating that transmission timing control for the lower node is not performed on a TA basis like other UEs (or other nodes) or a request not to perform the transmission timing control, for example, the upper node may determine to perform own timing control based on case 2 or 4 described above, may assume that the lower node is based on case 2 or 4, or may apply control based on case 2 or 4 to the lower node.

In this case, the transmission timing can be aligned between that for the upper node and that for the UE or the lower node in the lower node. Further, the upper node can easily control the transmission process (multiplexing of transmission signals, or the like).

Further, the timing control information may include information regarding how the own node can perform transmission timing control on the UE (or lower node) (or a request on how it is desired to be performed).

When the upper node receives from the lower node information indicating that TA control such that the DL transmission timing and the UL reception timing are different can be performed, or a request to perform the TA control, for example, the upper node may determine to perform own timing control based on case 4 described above, may assume that the lower node is based on case 4, or may apply control based on case 4 to the lower node.

In this case, it is assumed that there is a difference in the transmission timing of the accommodated UE between the nodes, and thus the upper node may perform control such as applying interlink interference measures (for example, making the misalignment in transmission/reception timings between IAB nodes fall within a certain range and adjusting the margin), and the like.

When the upper node receives information from the lower node indicating that TA control such that the DL transmission timing and the UL reception timing are different cannot be performed, or a request not to perform the TA control, for example, the upper node may determine to perform own timing control based on case 1 or 5 described above, may assume that the lower node is based on case 1 or 5, or may apply control based on case 1 or 5 to the lower node.

In this case, since it is assumed that there is no difference in the transmission timing of the accommodated UEs between the nodes, the upper node does not have to apply the interlink interference measures.

Note that when the IAB node transmits a request for timing control to the upper node, the IAB node may apply control based on at least one of cases 1 to 5 described above when having received a response to the request (for example, a response indicating that the request is accepted).

### <Timing control instruction to lower node>

In one embodiment, the IAB node may transmit information regarding the timing control of a lower node (hereinafter, also referred to as a timing control instruction) to the lower node. Note that when the IAB node has received the above-mentioned timing control information from the lower node, the IAB node may transmit a timing control instruction to the lower node.

When the lower node has received the timing control instruction from the upper node, the lower node may determine an own timing control method based on the instruction.

The IAB node may transmit the timing control instruction using higher layer signaling, physical layer signaling, or a combination thereof.

The IAB node may, for example, semi-statically transmit information regarding at least one of the following as the timing control instruction.
(1) Whether or not the DL transmission timing from the own node (upper node) to the lower node is different from the DL transmission timing for the UE, and if it is, how much it is different (timing offset),
(2) TA offset value for lower nodes,
(3) Which case (for example, cases 1 to 5 described above) the lower node applies.

For example, the lower node may control the reception timing of a signal from the upper node based on the information of (1) above. The lower node may control the UL transmission timing to the upper node based on the information of (2) above.

Note that the timing control instruction may include information regarding a target time to which the control based on (1) to (3) above is applied. For example, the timing control instruction may include a bitmap indicating at least one of one or more slots, one or more symbols, or the like to which the control based on (1) to (3) above is applied (bit length may correspond to a certain period).

The IAB node may, for example, dynamically transmit information regarding at least one of the following as the timing control instruction.
(A) Information of TA command for a particular transmission (for example, BH UL TX),
(B) Case application pattern (or TA offset application pattern) within a given period.

For example, the lower node may dynamically switch the case to be applied based on the information in (A) or (B) above.

### <Others>

In the IAB node, under certain conditions, the request for the cell phase synchronization accuracy of the TDD band need not be satisfied (may be relaxed). The IAB node applies the above request for the cell phase synchronization accuracy to the DL TX timing for UE (access link), for example, in the TDD band, and the TX timing for BH (backhaul link) (for example, for at least one of parent node or child node) may be not applicable for the request for the cell phase synchronization accuracy depending on the conditions.

The condition referred to here may be a condition based on the timing control report described above from the lower node of the IAB node, the timing control instruction described above from the upper node, or the like (for example, a specific value is notified, or the like).

For example, in a case where the timing of backhaul link communication (symbols, slots, or the like) between IAB nodes is matched, and a margin can be prepared between the timing of performing backhaul link communication and the timing of performing access link communication, the IAB node may shift the BH TX timing from the TX timing for UE based on the timing control instruction from the upper node.

Further, the request for the cell phase synchronization accuracy of the TDD band for IAB nodes may be newly specified. The IAB node may comply with this new request for the cell phase synchronization accuracy instead of the existing request for the cell phase synchronization accuracy.

For example, the new request for the cell phase synchronization accuracy may be a request in which the "frame start timing" in the existing request for the cell phase synchronization accuracy is replaced with a timing based on (or related to) at least one of a transmission timing of access link, a reception timing of access link, a transmission timing of backhaul link, or a reception timing of backhaul link. The above-mentioned given seconds are not limited to 3 µs and may be changed accompanying the replacement.

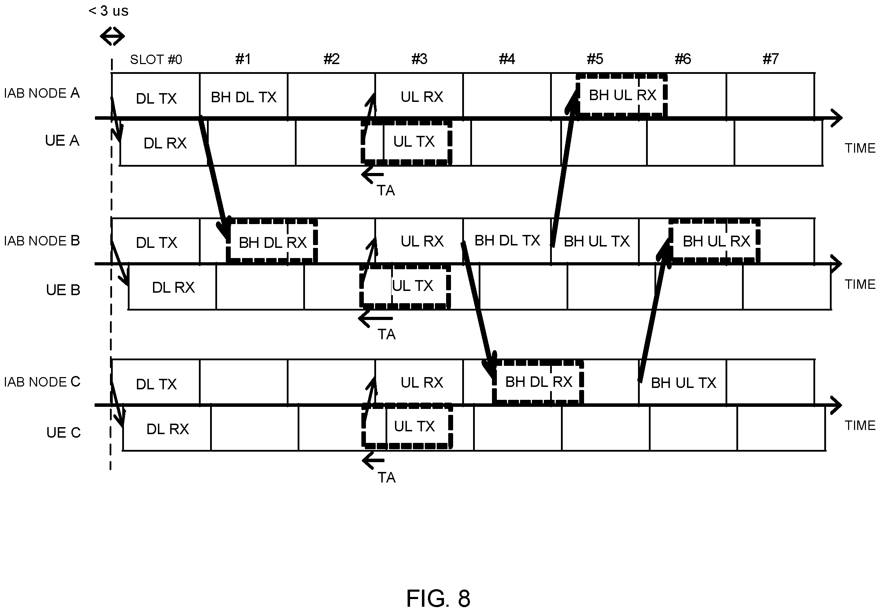

In addition, new cases other than above-described cases 1 to 5 may be supported. Fig. 8 is a diagram illustrating an example of transmission/reception timings of the new case. This example illustrates a configuration in which the timings of all TX (DL TX, BH DL TX, BH UL TX) between IAB nodes are aligned. With this configuration, the TX of the BH link can be easily multiplexed with other transmissions. A configuration that matches all transmission/reception timings between IAB nodes may be supported. Cases 1 to 5 in the present disclosure may be replaced with a form including the new case.

Further, in the above embodiment, the configuration in which the timing control information is transmitted to the upper node and the timing control instruction is transmitted to the lower node has been described, but the IAB node may transmit these to either the lower node or the upper node. In this case, the upper node and the lower node of the above-described embodiment may be replaced as appropriate.

According to the embodiment described above, the transmission/reception timings of the IAB node can be suitably controlled.

### (Radio communication system)

Now, a configuration of a radio communication system according to one embodiment of the present disclosure will be described below. In this radio communication system, communication is performed using one or a combination of the radio communication methods according to the embodiments of the present disclosure.

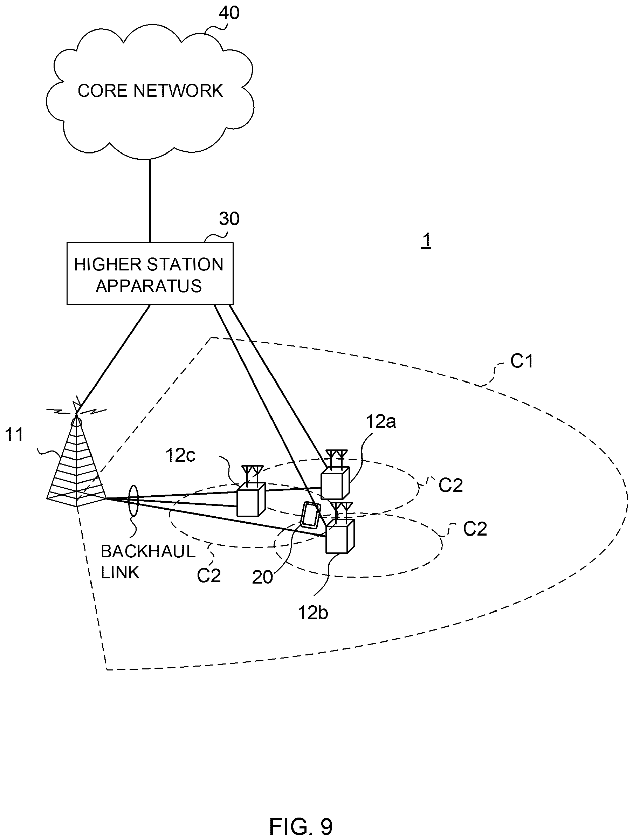

Fig. 9 is a diagram illustrating an example of a schematic configuration of a radio communication system according to one embodiment. A radio communication system 1 can employ at least one of carrier aggregation (CA) and/or dual connectivity (DC) to group a plurality of fundamental frequency blocks (component carriers) into one, where the system bandwidth (for example, 20 MHz) constitutes one unit.

Note that the radio communication system 1 may be referred to as LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), NR (New Radio), FRA (Future Radio Access), New-RAT (Radio Access Technology), and so on, or may be referred to as a system to implement these.

Further, the radio communication system 1 may support dual connectivity (multi-RAT dual connectivity (MR-DC)) between a plurality of RATs (Radio Access Technology). The MR-DC may include dual connectivity of LTE and NR (E-UTRA-NR Dual Connectivity (EN-DC)) in which a base station (eNB) of LTE (Evolved Universal Terrestrial Radio Access (E-UTRA)) becomes a master node (MN), and a base station (gNB) of NR becomes a secondary node (SN), dual connectivity of NR and LTE (NR-E-UTRA Dual Connectivity (NE-DC)) in which a base station (gNB) of NR becomes MN, and a base station (eNB) of the LTE (E-UTRA) becomes SN, and the like.

The radio communication system 1 includes a base station 11 that forms a macro cell C1 covering a relatively wide coverage, base stations 12 (12a to 12c) that are placed within the macro cell C1 and that form small cells C2, which are narrower than the macro cell C1. Further, a user terminal 20 is placed in the macro cell C1 and in each small cell C2. The arrangement, number and so on of cells and user terminal 20 are not limited to an aspect illustrated in the drawings.

The user terminal 20 can connect with both the base station 11 and the base stations 12. The user terminal 20 are assumed to use the macro cell C1 and the small cells C2 simultaneously using CA or DC. Further, the user terminal 20 may apply CA or DC using a plurality of cells (CCs).

Between the user terminal 20 and the base station 11, communication can be carried out using a carrier of a relatively low frequency band (for example, 2 GHz) and a narrow bandwidth (referred to as an "existing carrier", a "legacy carrier", and so on). Meanwhile, between the user terminal 20 and the base stations 12, a carrier of a relatively high frequency band (for example, 3.5 GHz, 5 GHz, and so on) and a wide bandwidth may be used, or the same carrier as that used in the base station 11 may be used. Note that the configuration of the frequency band for use in each base station is by no means limited to these.

Further, the user terminal 20 can perform communication in each cell using at least one of time division duplex (TDD) or frequency division duplex (FDD). Further, in each cell (carrier), a single numerology may be applied, or a plurality of different numerologies may be applied.

The numerology may be a communication parameter applied to at least one of transmission or reception of a certain signal or channel. The numerology may indicate, for example, at least one of subcarrier spacing, bandwidth, symbol length, cyclic prefix length, subframe length, TTI duration, the number of symbols per TTI, the radio frame configuration, particular filtering processing performed by the transceiver in frequency domains, particular windowing processing performed by a transceiver in time domains, and so on.

For example, for a certain physical channel, in the case where at least one of the subcarrier spacing of the constituent OFDM symbols and the number of OFDM symbols is different, it may be said that the numerology is different.

The base station 11 and the base station 12 (or between two base stations 12) may be connected by wire (for example, optical fiber, an X2 interface, and the like in compliance with the common public radio interface (CPRI)) or wirelessly. For example, when NR communication is used as a backhaul between base stations 11 and 12, the base station 11 corresponding to the upper station may be referred to as an IAB (Integrated Access Backhaul) donor, and the base station 12 corresponding to a relay station may be called an IAB node.

The base station 11 and the base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME), and so on, but is by no means limited to these. Also, each base station 12 may be connected with the higher station apparatus 30 via the base station 11.

Note that the base station 11 is a base station having a relatively wide coverage, and may be referred to as a "macro base station", an "aggregate node", an "eNB (eNodeB)", a "transmission/reception point", and so on. Also, the base stations 12 are base stations having local coverages, and may be referred to as "small base stations", "micro base stations", "pico base stations", "femto base stations", "HeNBs (Home eNodeBs)", "remote radio heads (RRHs)", "transmission/reception points", and so on. Hereinafter the base stations 11 and 12 will be collectively referred to as "base stations 10", unless specified otherwise.

The user terminals 20 are terminals to support various communication schemes such as LTE, LTE-A, and 5G, and may be either mobile communication terminals (mobile stations) or stationary communication terminals (fixed stations).

In the radio communication system 1, as a radio access method, orthogonal frequency division multiple access (OFDMA) is applied to the downlink, and at least one of single carrier-frequency division multiple access (SC-FDMA) or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single-carrier communication method of reducing an interference between terminals by dividing, for each of terminals, a system bandwidth into bands composed of one or continuous resource blocks, and causing a plurality of terminals to use mutually different bands. Note that the uplink and downlink radio access schemes are not limited to the combinations of these, and other radio access schemes can be used as well.

In the radio communication system 1, a physical downlink shared channel (PDSCH), a physical broadcast channel (PBCH), a downlink control channel, and the like, which are shared by each user terminal 20, are used as the downlink channel. User data, upper layer control information, system information blocks (SIBs), and the like are transmitted in the PDSCH. Further, MIB (Master Information Block) is transmitted by PBCH.

The downlink control channels include a physical downlink control channel (PDCCH), an enhanced physical downlink control channel (EPDCCH), a physical control format indicator channel (PCFICH), a physical hybrid-ARQ indicator channel (PHICH), and so on. Downlink control information (DCI) including scheduling information of at least one of PDSCH or PUSCH, and the like are transmitted by the PDCCH.

Note that DCI that schedules reception of DL data may also be referred to as "DL assignment", and DCI that schedules transmission of UL data may also be referred to as "UL grant".

The use of PCFICH can cause the number of OFDM symbols used for the PDCCH to be transmitted. The PHICH may cause hybrid automatic repeat request (HARQ) delivery acknowledgement information (for example, such as retransmission control information, HARQ-ACK, and ACK/NACK) for the PUSCH to be transmitted. The EPDCCH is frequency-division-multiplexed with the PDSCH (downlink shared data channel) and used for transmitting DCI and the like, like the PDCCH.

In the radio communication system 1, an uplink shared channel (physical uplink shared channel (PUSCH)), which is used by each user terminal 20 on a shared basis, an uplink control channel (physical uplink control channel (PUCCH)), a random access channel (physical random access channel (PRACH)), and so on are used as uplink channels. User data, upper layer control information, and so on are communicated by the PUSCH. Also, in the PUCCH, downlink radio link quality information (channel quality indicator (CQI)), delivery acknowledgement information, scheduling requests (SRs), and so on are communicated. By means of the PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs), and so on are transmitted as downlink reference signals. Also, in the radio communication system 1, measurement reference signals (SRSs (Sounding Reference Signals)), demodulation reference signals (DMRSs), and so on are communicated as uplink reference signals. Note that, DMRSs may be referred to as "user terminal-specific reference signals (UE-specific reference signals)". Also, the reference signals to be communicated are by no means limited to these.

### (Base station)

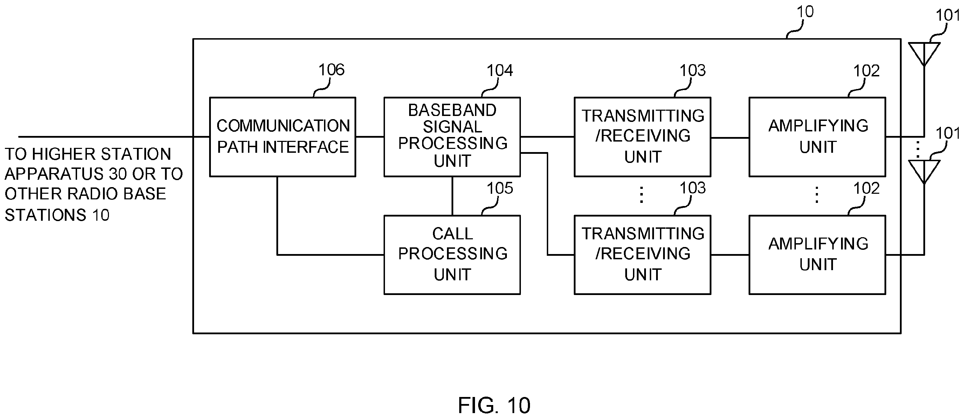

Fig. 10 is a diagram illustrating an example of an overall configuration of a base station according to one embodiment. A base station 10 has a plurality of transmitting/receiving antennas 101, amplifying units 102, transmitting/receiving units 103, a baseband signal processing unit 104, a call processing unit 105, and a communication path interface 106. Note that one or more transmitting/receiving antennas 101, amplifying units 102, and transmitting/receiving units 103 may be provided.

User data to be transmitted from the base station 10 to the user terminal 20 on the downlink is input from the higher station apparatus 30 to the baseband signal processing unit 104, via the communication path interface 106.

In the baseband signal processing unit 104, the user data is subjected to transmission processes, including a packet data convergence protocol (PDCP) layer process, division and coupling of user data, radio link control (RLC) layer transmission processes such as RLC retransmission control, medium access control (MAC) retransmission control (for example, an HARQ transmission process), scheduling, transport format selection, channel coding, an inverse fast Fourier transform (IFFT) process, and a precoding process, and so on and results of the processes will be forwarded to the transmitting/receiving unit 103. Furthermore, downlink control signals are also subjected to transmission processes such as channel coding and an inverse fast Fourier transform, and forwarded to the transmitting/receiving units 103.

Base band signals that are pre-coded and output from the baseband signal processing unit 104 on a per antenna basis are converted into a radio frequency band in the transmitting/receiving units 103, and then transmitted. The radio frequency signals having been subjected to frequency conversion in the transmitting/receiving units 103 are amplified in the amplifying units 102, and transmitted from the transmitting/receiving antennas 101. The transmitting/receiving unit 103 can be constituted by a transmitters/receiver, a transmitting/receiving circuit or transmitting/receiving apparatus that can be described based on general understanding of the technical field to which the present disclosure pertains. Note that a transmitting/receiving unit 103 may be structured as a transmitting/receiving unit in one entity, or may be constituted by a transmitting unit and a receiving unit.

Meanwhile, as for uplink signals, radio frequency signals that are received in the transmitting/receiving antennas 101 are each amplified in the amplifying units 102. The transmitting/receiving units 103 receive the uplink signals amplified in the amplifying units 102. The received signals are converted into the base band signal through frequency conversion in the transmitting/receiving units 103 and output to the baseband signal processing unit 104.

In the baseband signal processing unit 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing unit 105 performs call processing (such as configuration and releasing) of communication channels, manages the state of the base stations 10, and manages the radio resources.

The communication path interface 106 transmits and receives signals to and from the higher station apparatus 30 via a given interface. Also, the communication path interface 106 may transmit and receive signals (backhaul signaling) with other base stations 10 via an inter-base station interface (which is, for example, optical fiber, an X2 interface, or the like that is in compliance with the common public radio interface (CPRI)).

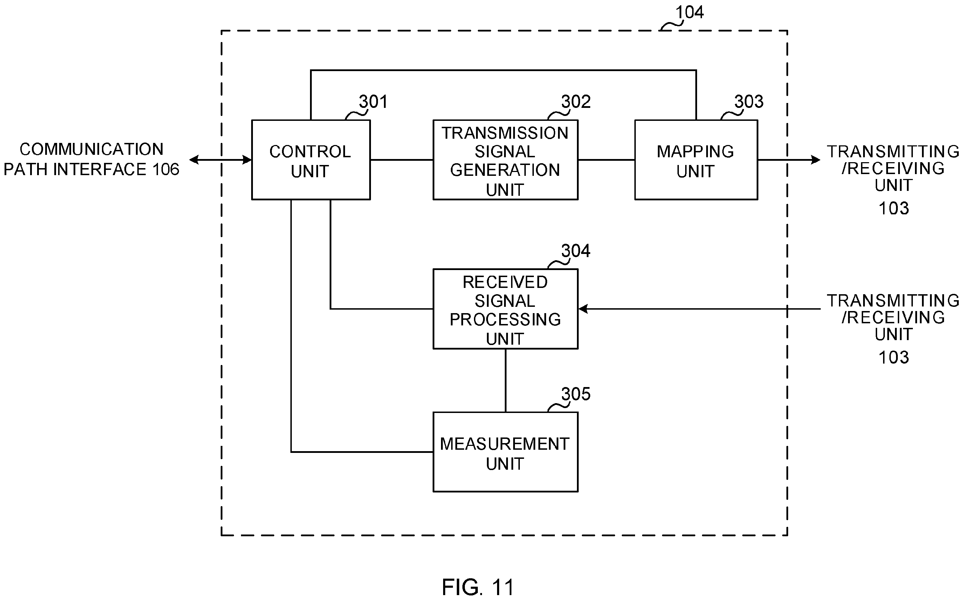

Fig. 11 is a diagram illustrating an example of a functional configuration of the base station according to one embodiment. Note that, although this example will primarily illustrate functional blocks that pertain to characteristic parts of the present embodiment, it may be assumed that the base station 10 has other functional blocks that are necessary for radio communication as well.

The baseband signal processing unit 104 at least has a control unit (scheduler) 301, a transmission signal generation unit 302, a mapping unit 303, a received signal processing unit 304, and a measurement unit 305. Note that these configurations have only to be included in the base station 10, and some or all of these configurations need not be included in the baseband signal processing unit 104.

The control unit (scheduler) 301 controls the whole of the base station 10. The control unit 301 can be constituted by a controller, a control circuit, or control apparatus that can be described based on general understanding of the technical field to which the present disclosure pertains.

For example, the control unit 301 controls generation of signals in the transmission signal generation unit 302, allocation of signals in the mapping unit 303, and so on. Furthermore, the control unit 301 controls the signal receiving process in the received signal processing unit 304, the measurements of signals in the measurement unit 305, and so on.

The control unit 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). Scheduling (for example, resource allocation) of delivery confirmation information). Further, the control unit 301 controls generation of downlink control signals, downlink data signals and so on, based on the results of deciding whether or not retransmission control is necessary for uplink data signals, and so on.

The control unit 301 controls scheduling of synchronization signals (for example, PSS/SSS), downlink reference signals (for example, CRS, CSI-RS, DMRS), and so on.

The transmission signal generation unit 302 generates downlink signals (downlink control signals, downlink data signals, downlink reference signals, and so on) based on instructions from the control unit 301, and outputs these signals to the mapping unit 303. The transmission signal generation unit 302 can be constituted by a signal generator, a signal generation circuit, or a signal generation apparatus that can be described based on general understanding of the technical field to which the present disclosure pertains.

For example, the transmission signal generation unit 302 generates DL assignments, which report downlink data allocation information, and/or UL grants, which report uplink data allocation information, based on instructions from the control unit 301. DL assignments and UL grants are both DCI, and follow the DCI format. Also, the downlink data signals are subjected to the coding processing, the modulation processing, and so on, by using coding rates and modulation schemes that are determined based on, for example, channel state information (CSI) reported from each user terminal 20.

The mapping unit 303 maps the downlink signals generated in the transmission signal generation unit 302 to given radio resources based on an instruction from the control unit 301, and outputs these to the transmitting/receiving units 103. The mapping unit 303 can be constituted by a mapper, a mapping circuit, or mapping apparatus that can be described based on general understanding of the technical field to which the present disclosure pertains.

The received signal processing unit 304 performs receiving processes (for example, demapping, demodulation, decoding, and so on) of received signals that are input from the transmitting/receiving units 103. Here, the received signals include, for example, uplink signals transmitted from the user terminals 20 (uplink control signals, uplink data signals, uplink reference signals, and so on). The received signal processing unit 304 can be constituted by a signal processor, a signal processing circuit, or a signal processing apparatus that can be described based on general understanding of the technical field to which the present disclosure pertains.

The received signal processing unit 304 outputs, to the control unit 301, information decoded by the receiving process. For example, when a PUCCH including an HARQ-ACK is received, the received signal processing unit 304 outputs this HARQ-ACK to the control unit 301. Also, the received signal processing unit 304 outputs the received signals and/or the signals after the receiving processes to the measurement unit 305.

The measurement unit 305 conducts measurements with respect to the received signals. The measurement unit 305 can be constituted by a measurer, a measurement circuit, or a measurement apparatus that can be described based on general understanding of the technical field to which the present disclosure pertains.

For example, the measurement unit 305 may perform radio resource management (RRM) measurement, channel state information (CSI) measurement, and the like based on the received signals. The measurement unit 305 may measure the received power (for example, reference signal received power (RSRP)), the received quality (for example, reference signal received quality (RSRQ)), the signal to interference plus noise ratio (SINR), the signal to noise ratio (SNR), the signal strength (for example, received signal strength indicator (RSSI)), the transmission path information (for example, CSI), and so on. The measurement results may be output to the control unit 301.

Note that the transmitting/receiving unit 103 may communicate with an IAB node (for example, another base station 10) by using, for example, NR communication. The control unit 301 may perform control that functions as an IAB node (may be referred to as a radio communication apparatus). Signals, channels, and the like transmitted and received between the base station 10 and the user terminal 20 may be used in NR communication between IAB nodes.

The control unit 301 may control transmission/reception using the transmitting/receiving unit 103 based on an instruction from an upper IAB node (for example, another base station 10). For example, the control unit 301 may control the own base station 10 to function as the user terminal 20 described later, assuming that the upper IAB node is another base station.

The control unit 301 may control the transmission/reception of the lower IAB node (for example, another base station 10). For example, the control unit 301 may control to transmit information (DCI and the like) for controlling transmission/reception of the lower IAB node, assuming that the lower IAB node is the user terminal 20 described later.

The control unit 301 may determine timing control of at least one of transmission and reception based on information received from another IAB node (for example, an upper IAB node or a lower IAB node). The received information may be capability information or request regarding the timing control of the other IAB node. Further, the received information may be an instruction regarding timing control of the own device (base station 10) .

The transmitting/receiving unit 103 may transmit capability information or a request regarding timing control of the own apparatus to another IAB node. Further, the transmitting/receiving unit 103 may transmit an instruction regarding timing control of another IAB node to the another IAB node.

The control unit 301 may perform control that allows the request for the cell phase synchronization accuracy of the TDD band to be unsatisfied (or ignores the request or follows the request for the IAB node) under a certain condition.

### (User terminal)

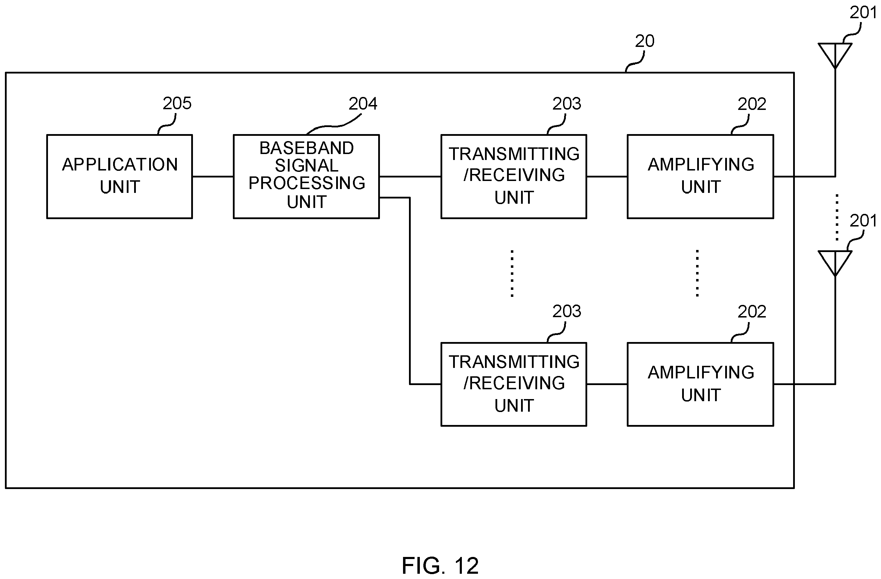

Fig. 12 is a diagram illustrating an example of an overall configuration of a user terminal according to one embodiment. A user terminal 20 has a plurality of transmitting/receiving antennas 201, amplifying units 202, transmitting/receiving units 203, a baseband signal processing unit 204, and an application unit 205. Note that one or more transmitting/receiving antennas 201, amplifying units 202, and transmitting/receiving units 203 may be provided.

Radio frequency signals that are received in the transmitting/receiving antennas 201 are amplified in the amplifying units 202. The transmitting/receiving units 203 receive the downlink signals amplified in the amplifying units 202. The transmitting/receiving unit 203 performs frequency conversion to convert a received signal to a base band signal, and outputs the base band signal to the baseband signal processing unit 204. The transmitting/receiving unit 203 can be constituted by a transmitters/receiver, a transmitting/receiving circuit, or a transmitting/receiving apparatus that can be described based on general understanding of the technical field to which the present disclosure pertains. Note that the transmitting/receiving unit 203 may be constituted as an integrated transmitting/receiving unit or may be constituted by a transmitting unit and a receiving unit.

The baseband signal processing unit 204 performs FFT processing, error correction decoding, retransmission control receiving process, and the like on the input base band signal. Downlink user data is forwarded to the application unit 205. The application unit 205 performs processes related to upper layers above the physical layer and the MAC layer, and so on. Further, in the downlink data, broadcast information may also be transferred to the application unit 205.

Meanwhile, uplink user data is input from the application unit 205 to the baseband signal processing unit 204. The baseband signal processing unit 204 performs a retransmission control transmission process (for example, an HARQ transmission process), channel coding, precoding, a discrete Fourier transform (DFT) process, an IFFT process and so on, and the result is forwarded to the transmitting/receiving unit 203.

The transmitting/receiving unit 203 converts a base band signal output from the baseband signal processing unit 204 into a signal in a radio frequency band, and transmits the signal. The radio frequency signals having been subjected to frequency conversion in the transmitting/receiving units 203 are amplified in the amplifying units 202, and transmitted from the transmitting/receiving antennas 201.

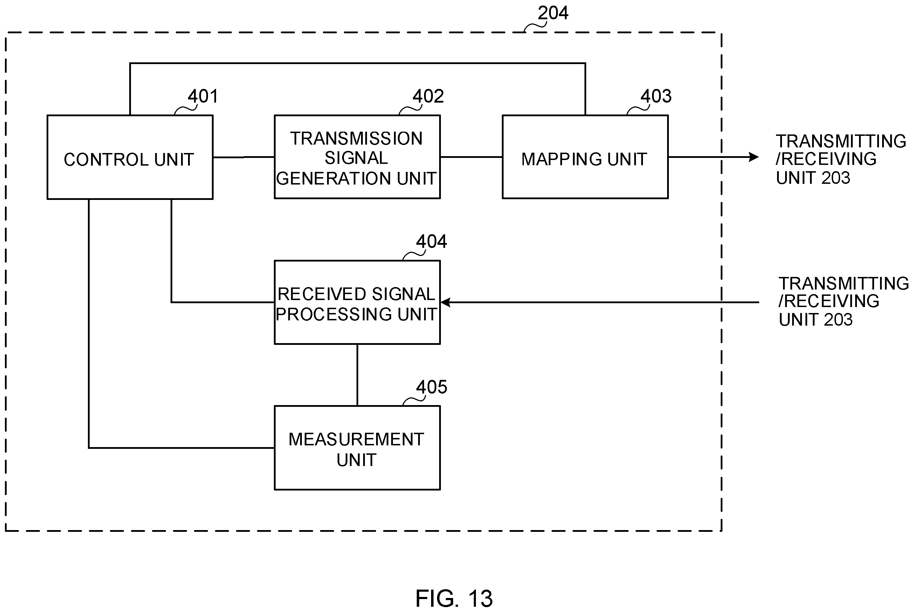

Fig. 13 is a diagram illustrating an example of a functional configuration of the user terminal according to one embodiment. Note that, although this example will primarily illustrate functional blocks that pertain to characteristic parts of the present embodiment, it may be assumed that the user terminal 20 have other functional blocks that are necessary for radio communication as well.

The baseband signal processing unit 204 provided in the user terminal 20 at least has a control unit 401, a transmission signal generation unit 402, a mapping unit 403, a received signal processing unit 404 and a measurement unit 405. Note that these configurations have only to be included in the user terminal 20, and some or all of the configurations need not be included in the baseband signal processing unit 204.

The control unit 401 controls the whole of the user terminal 20. The control unit 401 can be constituted by a controller, a control circuit, or a control apparatus that can be described based on general understanding of the technical field to which the present disclosure pertains.

The control unit 401, for example, controls generation of signals in the transmission signal generation unit 402, the allocation of signals in the mapping unit 403, and so on. Furthermore, the control unit 401 controls the signal receiving process in the received signal processing unit 404, the measurements of signals in the measurement unit 405, and so on.

The control unit 401 acquires the downlink control signals and downlink data signals transmitted from the base station 10, via the received signal processing unit 404. The control unit 401 controls generation of uplink control signals and/or uplink data signals based on the results of deciding whether or not retransmission control is necessary for the downlink control signals and/or downlink data signals, and so on.

The control unit 401 may use digital BF (for example, precoding) by the baseband signal processing unit 204 and/or analog BF (for example, phase rotation) by the transmitting/receiving units 203 to form a Tx beam and/or a reception beam.

Further, when the control unit 401 acquires various information reported from the base station 10 from the received signal processing unit 404, the control unit 401 may update the parameter used for control based on the information.

The transmission signal generation unit 402 generates uplink signals (uplink control signals, uplink data signals, uplink reference signals, and the like) based on instructions from the control unit 401, and outputs these signals to the mapping unit 403. The transmission signal generation unit 402 can be constituted by a signal generator, a signal generation circuit, or a signal generation apparatus that can be described based on general understanding of the technical field to which the present disclosure pertains.

For example, the transmission signal generation unit 402 generates uplink control signals such as delivery acknowledgement information, channel state information (CSI), and so on, based on an instruction from the control unit 401. Also, the transmission signal generation unit 402 generates uplink data signals based on instructions from the control unit 401. For example, when a UL grant is included in a downlink control signal that is reported from the base station 10, the control unit 401 instructs the transmission signal generation unit 402 to generate an uplink data signal.

The mapping unit 403 maps the uplink signals generated in the transmission signal generation unit 402 to radio resources based on an instruction from the control unit 401, and output the result to the transmitting/receiving unit 203. The mapping unit 403 can be constituted by a mapper, a mapping circuit, or a mapping apparatus that can be described based on general understanding of the technical field to which the present disclosure pertains.

The received signal processing unit 404 performs receiving processes (for example, demapping, demodulation, decoding, and so on) of received signals that are input from the transmitting/receiving units 203. Here, the received signals include, for example, downlink signals (downlink control signals, downlink data signals, downlink reference signals, and so on) that are transmitted from the base station 10. The received signal processing unit 404 can be constituted by a signal processor, a signal processing circuit, or a signal processing apparatus that can be described based on general understanding of the technical field to which the present disclosure pertains. Also, the received signal processing unit 404 can constitute the receiving unit according to the present disclosure.

The received signal processing unit 404 outputs the decoded information that is acquired through the receiving process to the control unit 401. The received signal processing unit 404 outputs, for example, broadcast information, system information, RRC signaling, DCI, and so on, to the control unit 401. Also, the received signal processing unit 404 outputs the received signals and/or the signals after the receiving processes to the measurement unit 405.

The measurement unit 405 conducts measurements with respect to the received signals. The measurement unit 405 can be constituted by a measurer, a measurement circuit or measurement apparatus that can be described based on general understanding of the technical field to which the present disclosure pertains.

For example, the measurement unit 405 may perform RRM measurements, CSI measurements, and so on based on the received signals. The measurement unit 405 may measure the received power (for example, RSRP), the received quality (for example, RSRQ, SINR, SNR, or the like), the signal strength (for example, RSSI), transmission path information (for example, CSI), and so on. The measurement results may be output to the control unit 401.

### (Hardware configuration)

Note that the block diagrams that have been used to describe the above embodiments illustrate blocks in functional units. These functional blocks (components) may be implemented in arbitrary combinations of at least one of hardware or software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses. The functional block may be implemented by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, and assigning. For example, a functional block (configuration unit) that causes transmission to function may be referred to as a transmitting unit, a transmitter, or the like. In any case, as described above, the implementation method is not particularly limited.

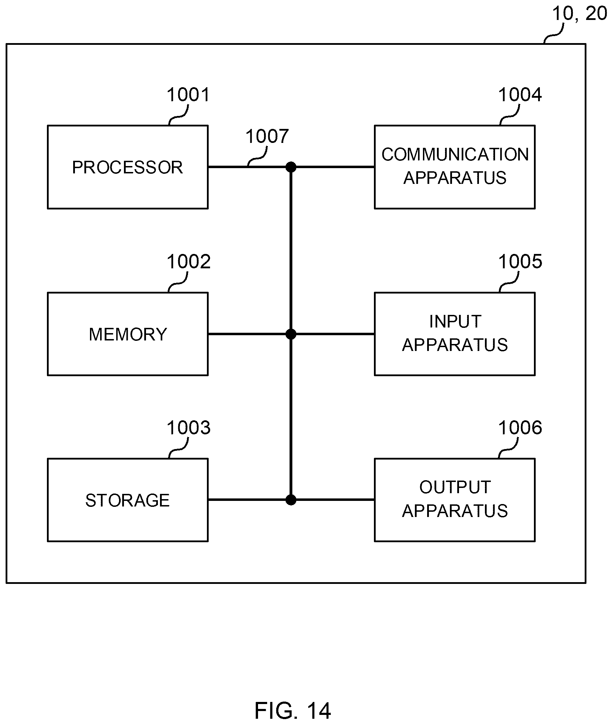

For example, the base station, the user terminal, and so on according to one embodiment of the present disclosure may function as a computer that executes the processing of the radio communication method of the present disclosure. Fig. 14 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the terms such as an apparatus, a circuit, a device, a section, and a unit can be replaced with each other. The hardware configuration of the base station 10 and the user terminal 20 may be configured to include one or more of each apparatus illustrated in the drawings, or may be configured not to include some apparatuses.

For example, although only one processor 1001 is illustrated, a plurality of processors may be provided. Furthermore, processes may be implemented with one processor, or processes may be implemented in sequence, or in different manners, on two or more processors. Note that the processor 1001 may be implemented with one or more chips.

Each function of the base station 10 and the user terminal 20 is implemented by, for example, reading given software (program) on hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be configured with a central processing unit (CPU), which includes interfaces with peripheral equipment, a control apparatus, a computing apparatus, a register, and so on. For example, the above-described baseband signal processing unit 104 (204), call processing unit 105, and so on may be implemented by the processor 1001.

Furthermore, the processor 1001 reads programs (program codes), software modules, or data, from at least one of the storage 1003 or the communication apparatus 1004, into the memory 1002, and executes various processing according to these. As for the programs, programs to allow computers to execute at least part of the operations of the above-described embodiments may be used. For example, the control unit 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of read only memory (ROM), erasable programmable ROM (EPROM), electrically EPROM (EEPROM), random access memory (RAM) and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (compact disc ROM (CD-ROM) and so on), a digital versatile disc, or a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus".

The communication apparatus 1004 is hardware (transmitting/receiving device) for performing inter-computer communication via at least one of a wired network or a radio network, and for example, is referred to as "network device", "network controller", "network card", "communication module", and the like. The communication apparatus 1004 may be configured to include a high frequency switch, a duplexer, a filter, a frequency synthesizer and so on in order to realize, for example, at least one of frequency division duplex (FDD) or time division duplex (TDD). For example, the above-described transmitting/receiving antennas 101 (201), amplifying units 102 (202), transmitting/receiving units 103 (203), communication path interface 106 and so on may be implemented by the communication apparatus 1004. The transmitting/receiving unit 103 (203) may be implemented in a physically or logically separated manner by the transmitting unit 103a (203a) and the receiving unit 103b (203b).

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated configuration (for example, a touch panel).

Furthermore, these apparatuses, including the processor 1001, the memory 1002, and so on are connected by the bus 1007 for information communication. The bus 1007 may include a single bus, or may include different buses for each pair of apparatuses.

Also, the base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Modified examples)

Note that the terminology used in the present disclosure and the terminology that is needed to understand the present disclosure may be replaced with other terms that convey the same or similar meanings. For example, at least one of channels or symbols may be replaced by signals (signaling). Also, "signals" may be replaced with "messages". A reference signal may be abbreviated as an "RS", and may be referred to as a "pilot", a "pilot signal" and so on, depending on which standard applies. Furthermore, a "component carrier (CC)" may be referred to as a "cell", a "frequency carrier", a "carrier frequency" and so on.

A radio frame may be composed of one or more periods (frames) in the time domain. Each of one or more periods (frames) constituting a radio frame may be referred to as a "subframe". Furthermore, a subframe may include one or multiple slots in the time domain. A subframe may be a fixed time duration (for example, 1 ms) that is not dependent on numerology.

Here, the numerology may be a communication parameter used for at least one of transmission or reception of a certain signal or channel. For example, the numerology may indicate at least one of SubCarrier Spacing (SCS), a bandwidth, a symbol length, a cyclic prefix length, a transmission time interval (TTI), the number of symbols per TTI, a radio frame configuration, specific filtering processing to be performed by a transceiver in the frequency domain, specific windowing processing to be performed by a transceiver in the time domain and so on.

A slot may be composed of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology.

A slot may include a plurality of mini slots. Each mini slot may include one or more symbols in the time domain. Also, a mini slot may be referred to as a "subslot". Each mini slot may include fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type B".

Each of the radio frame, the subframe, the slot, the mini slot, and the symbol represents a time unit at the time of transmitting a signal. A radio frame, a subframe, a slot, a mini slot and a symbol may be each called by other applicable names. Note that time units such as a frame, a subframe, a slot, a mini slot, and a symbol in the present disclosure may be replaced with each other.

For example, one subframe may be referred to as a "transmission time interval (TTI)", or a plurality of consecutive subframes may be referred to as a "TTI", or one slot or one mini slot may be referred to as a "TTI". That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "mini slot" and so on, instead of a "subframe".

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

TTI having a time length of 1 ms may be referred to as usual TTI (TTI in LTE Rel. 8 to 12), normal TTI, long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a usual TTI, a subframe, or the like) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be 12, for example. The number of subcarriers included in the RB may be determined based on numerology.

Also, an RB may include one or more symbols in the time domain, and may be one slot, one mini slot, one subframe or one TTI in length. One TTI, one subframe, and the like each may be composed of one or more resource blocks.

Note that one or more RBs may be referred to as a "physical resource block (PRB (Physical RB))", a "subcarrier group (SCG)", a "resource element group (REG)", a "PRB pair", an "RB pair" and so on.

Furthermore, a resource block may be composed of one or more resource elements (REs). For example, one RE may be a radio resource field of one subcarrier and one symbol.

The bandwidth part (BWP) (which may be referred to as partial bandwidth or the like) may represent a subset of consecutive common RB (common resource blocks) for a certain numerology in a certain carrier. Here, the common RB may be specified by the index of the RB based on a common reference point of the carrier. The PRB may be defined in a certain BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE need not expect to transmit or receive a given signal/channel outside the active BWP. Note that "cell", "carrier", and the like in the present disclosure may be replaced with "BWP".

Note that the configurations of radio frames, subframes, slots, mini slots, symbols, and the like described above are merely examples. For example, configurations pertaining to the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol duration, the length of cyclic prefixes (CPs), and the like can be variously changed.

Also, the information, the parameters, and the like described in the present disclosure may be represented in absolute values or in relative values with respect to given values, or may be represented using other applicable information. For example, a radio resource may be specified by a given index.

The names used for parameters and so on in the present disclosure are in no respect limiting. In addition, an equation and so on using these parameters may differ from those explicitly disclosed in the present disclosure. Since various channels (physical uplink control channel (PUCCH), physical downlink control channel (PDCCH), and the like) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Further, information, signals, and the like can be output in at least one of a direction from upper layers to lower layers and a direction from lower layers to upper layers. Information, signals, and the like may be input and output via a plurality of network nodes.

The information, signals, and the like that have been input and/or output may be stored in a specific location (for example, in a memory), or may be managed in a control table. The information, signals and so on to be input and/or output can be overwritten, updated, or appended. The information, signals and so on that are output may be deleted. The information, signals, and the like that are input, may be transmitted to other apparatuses.

The reporting of information is by no means limited to the aspects/embodiments described in the present disclosure, and may be performed using other methods. For example, the reporting of information may be implemented by physical layer signaling (for example, downlink control information (DCI), uplink control information (UCI)), higher layer signaling (for example, radio resource control (RRC) signaling, broadcast information (master information block (MIB), system information block (SIB), and the like), and medium access control (MAC) signaling), other signals or combinations of these.

Note that physical layer signaling may be referred to as "L1/L2 (Layer 1/Layer 2) control information (L1/L2 control signals)", "L1 control information (L1 control signal)" and so on. Also, RRC signaling may be referred to as "RRC messages", and can be, for example, an RRC connection setup message, RRC connection reconfiguration message, and so on. Also, MAC signaling may be reported using, for example, MAC control elements (MAC CEs (Control Elements)).

Further, reporting of given information (for example, reporting of information to the effect that "X holds") does not necessarily have to be sent explicitly, and may be sent implicitly (for example, by not reporting this given information, or by reporting another piece of information).

Decisions may be made in values represented by one bit (0 or 1), may be made in Boolean values that represent true or false, or may be made by comparing numerical values (for example, comparison with a given value).

Regardless of whether referred to as "software", "firmware", "middleware", "microcode" or "hardware description language", or called by other names, software should be interpreted broadly to mean instructions, instruction sets, code, code segments, program codes, programs, subprograms, software modules, applications, software applications, software packages, routines, subroutines, objects, executable files, execution threads, procedures, functions and so on.

Also, software, instructions, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and radio technologies (infrared radiation, microwaves, and the like), at least one of these wired technologies and radio technologies are also included in the definition of communication media.

The terms "system" and "network" as used in the present disclosure are used interchangeably.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be compatibly used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be called a term such as a macro cell, a small cell, a femto cell, a pico cell, and the like.

A base station can accommodate one or more (for example, three) cells. When a base station accommodates a plurality of cells, the entire coverage area of the base station can be partitioned into a plurality of smaller areas, and each smaller area can provide communication services through base station subsystems (for example, indoor small base stations (remote radio heads (RRHs))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as a transmitting apparatus, a receiving apparatus, a radio communication apparatus, or the like. Note that at least one of the base station and mobile station may be a device mounted on a moving body, a moving body itself and the like. The moving object may be a transportation (for example, a car, an airplane and so on), an unmanned moving object (for example, a drone, an autonomous car and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Further, the base stations in the present disclosure may be replaced with the user terminal. For example, each aspect/embodiment of the present disclosure may be applied to a configuration in which communication between the base station and the user terminal is replaced by communication among a plurality of user terminal (which may be referred to as, for example, D2D (Device-to-Device), V2X (Vehicle-to-Everything), and so on). In this case, the user terminal 20 may have the functions of the base station 10 described above. In addition, the wording such as "up" and "down" may be replaced with the wording corresponding to the terminal-to-terminal communication (for example, "side"). For example, an uplink channel, a downlink channel, and so on may be replaced with a side channel.

Likewise, the user terminal in the present disclosure may be replaced with the base station. In this case, the base station 10 may have the functions of the user terminal 20 described above.

In the present disclosure, an operation performed by a base station may be performed by an upper node thereof in some cases. In a network composed of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments described in the present disclosure may be used individually or in combinations, which may be switched depending on the mode of implementation. Further, the order of a processing procedure, a sequence, a flowchart, and so on of each aspect/embodiment described in the present disclosure may be changed as long as there is no inconsistencies. For example, regarding the methods described in the present disclosure, elements of various steps are presented using an illustrative order, and are not limited to the presented particular order.

Each aspect/embodiment described in the present disclosure may be applied to a system using long term evolution (LTE), LTE-Advanced (LTE-A), LTE-Beyond (LTE-B), SUPER 3G, IMT-Advanced, 4th generation mobile communication system (4G), 5th generation mobile communication system (5G), future radio access (FRA), new radio access technology (New-RAT), New Radio(NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate radio communication methods and a next generation system expanded based on these methods, and the like. Further, a plurality of systems may be combined and applied (for example, a combination of LTE or LTE-A and 5G, or the like).

The phrase "based on" as used in the present disclosure does not mean "based only on", unless otherwise specified. In other words, the phrase "based on" means both "based only on" and "based at least on".

Reference to elements with designations such as "first", "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The term "determining" as used in the present disclosure may encompass a wide variety of operations. For example, "determining" may be regarded as judging, calculating, computing, processing, deriving, investigating, looking up, search, inquiry (for example, looking up in a table, database, or another data structure), ascertaining, and the like.

Furthermore, "determine" as used herein may be interpreted to mean making a determinations related to receiving (for example, receiving information), transmitting (for example, transmitting information), inputting, outputting, accessing (for example, accessing data in a memory), and the like.

In addition, "determine" as used herein may be interpreted to mean making determinations related to resolving, selecting, choosing, establishing, comparing, and the like. In other words, "determine" as used herein may be interpreted to mean making determinations related to some operation.

In addition, "determining" as used herein may be replaced with "assuming", "expecting", "considering", and the like.

As used in the present disclosure, the terms "connected" and "coupled", or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as some non-limiting and non-inclusive examples, by using electromagnetic energy having wavelengths in a radio frequency domain, a microwave domain, and an optical (both visible and invisible) domain, or the like.

In the present disclosure, the phrase "A and B are different" may mean "A and B are different from each other". Note that the term may mean that "each of A and B is different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of exemplification and explanation, and should by no means be construed to limit the invention according to the present disclosure in any way.

## Claims

1. A radio communication apparatus comprising:
a transmitting/receiving unit that communicates with an integrated access backhaul (IAB) node; and
a control unit that determines timing control of at least one of transmission and reception based on information received from the IAB node.

2. The radio communication apparatus according to claim 1, wherein the information is capability information or a request related to timing control of the IAB node.

3. The radio communication apparatus according to claim 1, wherein the information is an instruction related to timing control of an own device.

4. The radio communication apparatus according to any one of claims 1 to 3, wherein the control unit allows a request for cell phase synchronization accuracy of a time division duplex (TDD) band to be unsatisfied under a certain condition.

5. A radio communication method of a radio communication apparatus, comprising:
a step of communicating with an integrated access backhaul (IAB) node; and
a step of determining timing control of at least one of transmission or reception based on information received from the IAB node.
